# EUROPEAN PATENT APPLICATION

(11) **EP 2 977 254 A1**
(43) Date of publication of application: **27.01.2016**
(21) Application number: 15173384.7
(22) Date of filing: 23.06.2015
(51) Int. Cl.: B60L 11/18

(54) **EV INTEGRATED TEMPERATURE CONTROL SYSTEM**

(30) Priority: 25.07.2014 US 201414340606
(71) Applicant: Atieva, Inc., Menlo Park, CA 94025 (US)
(72) Inventor: GAUTHIER, Jean-Philippe, San Francisco, CA California 94115 (US)
(74) Representative: Prüfer & Partner mbB European Patent Attorneys

(57) **Abstract**

A thermal management system is provided that allows efficient thermal communication between a refrigerant-based control circuit and a pair of non-refrigerant-based control circuits, where one of the non-refrigerant-based control circuits is thermally coupled to the vehicle's battery system and the other of the non-refrigerant-based control circuits is thermally coupled to the vehicle's drive train. The refrigerant-based control circuit may be operated either in a heating mode or a cooling mode and is coupled to the vehicle's HVAC system using a refrigerant-air heat exchanger, and to one of the non-refrigerant-based control circuits using a refrigerant-fluid heat exchanger. Multiple diverter valves allow the three thermal control circuits to be arranged in any of a variety of configurations, and to be coupled to any of a variety of radiators, thus allowing the system to efficiently regulate the temperature of the passenger cabin, the battery system and the drive train.

## Description

### FIELD OF THE INVENTION

The present invention relates generally to electric vehicles and, more particularly, to a configurable temperature control system.

### BACKGROUND OF THE INVENTION

In response to the demands of consumers who are driven both by ever-escalating fuel prices and the dire consequences of global warming, the automobile industry is slowly starting to embrace the need for ultra-low emission, high efficiency cars. While some within the industry are attempting to achieve these goals by engineering more efficient internal combustion engines, others are incorporating hybrid or all-electric drive trains into their vehicle line-ups. To meet consumer expectations, however, the automobile industry must not only achieve a greener drive train, but must do so while maintaining reasonable levels of performance, range, reliability, and cost.

Electric vehicles, due to their reliance on rechargeable batteries, require a relatively sophisticated thermal management system to insure that the batteries remain within their desired operating temperature range while still providing adequate heating and cooling within the passenger cabin and not unduly affecting the vehicle's overall operating efficiency. A variety of approaches have been taken to try and meet these goals. For example, U.S. Patent No. 6,360,835 discloses a thermal management system for use with a fuel-cell-powered vehicle, the system utilizing both low and high temperature heat transfer circuits that share a common heat transfer medium, the dual circuits required to adequately cool the vehicle's exothermic components and heat the vehicle's endothermic components.

U.S. Patent No. 7,789,176 discloses a thermal management system that utilizes multiple cooling loops and a single heat exchanger. In an exemplary embodiment, one cooling loop is used to cool the energy storage system, a second cooling loop corresponds to the HVAC subsystem, and a third cooling loop corresponds to the drive motor cooling system. The use of a heater coupled to the first cooling loop is also disclosed, the heater providing a means for insuring that the batteries are warm enough during initial vehicle operation or when exposed to very low ambient temperatures.

U.S. Patent No. 8,336,319 discloses an EV dual mode thermal management system designed to optimize efficiency between two coolant loops, the first cooling loop in thermal communication with the vehicle's batteries and the second cooling loop in thermal communication with at least one drive train component such as an electric motor or an inverter. The disclosed system uses a dual mode valve system to configure the thermal management system between a first mode and a second mode of operation, where in the first mode the two cooling loops operate in parallel and in the second mode the two cooling loops operate in series.

Although the prior art discloses numerous techniques for cooling the battery pack of an electric vehicle, an improved thermal management system is needed that is capable of maintaining the batteries within their desired operating temperature range while still providing means for optimizing overall vehicle operating efficiency. The present invention provides such a thermal management system.

### SUMMARY OF THE INVENTION

The present invention provides a vehicle thermal management system that utilizes three separate thermal control circuits to provide an efficient thermal control system. The system includes (i) a refrigerant-based thermal control loop comprised of a refrigerant, a compressor, a condenser and a reversing valve where the reversing valve is settable in a first, cooling mode or a second, heating mode; (ii) a refrigerant-air heat exchanger coupled to the refrigerant-based thermal control loop by a first solenoid-controlled expansion valve and thermally coupled to a vehicle HVAC system; (iii) a first thermal control circuit utilizing a first thermal transfer fluid and a first fluid pump, where the first thermal transfer fluid is not comprised of a refrigerant, and where the first thermal control circuit is thermally coupled to a vehicle battery system; (iv) a refrigerant-fluid heat exchanger coupled to the refrigerant-based thermal control loop by a second solenoid-controlled expansion valve and thermally coupled to the first thermal control circuit; (v) a second thermal control circuit utilizing a second thermal transfer fluid and a second fluid pump, where the second thermal transfer fluid is not comprised of a refrigerant, and where the second thermal control circuit is thermally coupled to a vehicle drive train; and (vi) a fluid-fluid heat exchanger thermally coupling the first thermal control circuit to the second thermal control circuit.

In one aspect, the first solenoid-controlled expansion valve in a first position decouples the refrigerant-based thermal control loop from the refrigerant-air heat exchanger, and in a second position couples the refrigerant-based thermal control loop to the refrigerant-air heat exchanger. The first solenoid-controlled expansion valve may be configured to be adjustable over a range of positions from the first position to the second position, where the range of positions varies refrigerant flow rate from the refrigerant-based thermal control loop through the refrigerant-air heat exchanger.

In another aspect, the second solenoid-controlled expansion valve in a first position decouples the refrigerant-based thermal control loop from the refrigerant-fluid heat exchanger, and in a second position couples the refrigerant-based thermal control loop to the refrigerant-fluid heat exchanger. The second solenoid-controlled expansion valve may be configured to be adjustable over a range of positions from the first position to the second position, where the range of positions varies refrigerant flow rate from the refrigerant-based thermal control loop through the refrigerant-fluid heat exchanger.

In another aspect, the system may include a radiator coupled to the first thermal control circuit by a diverter valve, where the diverter valve in a first position couples the radiator to the first thermal control circuit and allows at least a portion of the first thermal transfer fluid to flow through the radiator, and where the diverter valve in a second position decouples the radiator from the first thermal control circuit and allows the first thermal transfer fluid within the first thermal control circuit to bypass the radiator. In the first position, the diverter valve may be configured to allow a second portion of the first thermal transfer fluid to bypass the radiator. In a third position, the diverter valve may be configured to couple the radiator to the first thermal control circuit and allows the first thermal transfer fluid to flow through the radiator while preventing the second portion of the first thermal transfer fluid from bypassing the radiator. The system may further include a blower fan configured to force air through the radiator.

In another aspect, the system may include a radiator coupled to the first thermal control circuit by a diverter valve, where the diverter valve in a first position couples the radiator to the first thermal control circuit and allows the first thermal transfer fluid to flow through the radiator, and where the diverter valve in a second position decouples the radiator from the first thermal control circuit and allows the first thermal transfer fluid within the first thermal control circuit to bypass the radiator.

In another aspect, the system may include a radiator coupled to the second thermal control circuit by a diverter valve, where the diverter valve in a first position couples the radiator to the second thermal control circuit and allows the second thermal transfer fluid to flow through the radiator, and where the diverter valve in a second position decouples the radiator from the second thermal control circuit and allows the second thermal transfer fluid within the second thermal control circuit to bypass the radiator and flow through the fluid-fluid heat exchanger. The system may further include a blower fan configured to force air through the radiator.

In another aspect, the system may include a HVAC radiator coupled to the second thermal control circuit by a diverter valve, where the diverter valve in a first position couples the HVAC radiator to the second thermal control circuit and allows at least a portion of the second thermal transfer fluid to flow through the HVAC radiator, and where the diverter valve in a second position decouples the HVAC radiator from the second thermal control circuit and allows the second thermal transfer fluid within the second thermal control circuit to bypass the HVAC radiator. In the first position, the diverter valve may be configured to allow a second portion of the second thermal transfer fluid to bypass the HVAC radiator. In a third position, the diverter valve may be configured to couple the HVAC radiator to the second thermal control circuit and allows the second thermal transfer fluid to flow through the HVAC radiator while preventing the second portion of the second thermal transfer fluid from bypassing the HVAC radiator. The system may further include a blower fan configured to force air through the HVAC radiator.

In another aspect, the system may include a HVAC radiator coupled to the second thermal control circuit by a diverter valve, where the diverter valve in a first position couples the HVAC radiator to the second thermal control circuit and allows the second thermal transfer fluid to flow through the HVAC radiator, and where the diverter valve in a second position decouples the HVAC radiator from the second thermal control circuit and allows the second thermal transfer fluid within the second thermal control circuit to bypass the HVAC radiator.

In another aspect, the system may include a supplemental electric heater coupled to the vehicle HVAC system.

In another aspect, the system may include a supplemental electric heater coupled to the first thermal control circuit.

In another aspect, the vehicle battery system may include a plurality of batteries and a plurality of cooling conduits in thermal communication with the plurality of batteries, where the first thermal transfer fluid flows through the plurality of cooling conduits. The vehicle battery system may further include a DC/DC converter.

In another aspect, the vehicle drive train may include a motor and a power inverter.

In another aspect, the first and second thermal transfer fluids may be selected from the group of fluids consisting of water and water with an additive, where the additive may be selected from the group consisting of ethylene glycol and propylene glycol.

In another aspect, the HVAC system may include at least one blower fan.

A further understanding of the nature and advantages of the present invention may be realized by reference to the remaining portions of the specification and the drawings.

### BRIEF DESCRIPTION OF THE DRAWINGS

It should be understood that the accompanying figures are only meant to illustrate, not limit, the scope of the invention and should not be considered to be to scale. Additionally, the same reference label on different figures should be understood to refer to the same component or a component of similar functionality.
Fig. 1 provides a perspective view of a battery pack and the vehicle chassis to which it is to be mounted;
Fig. 2 illustrates an exemplary battery pack cooling system in accordance with the prior art;
Fig. 3 illustrates an alternate battery pack cooling system in accordance with the prior art;
Fig. 4 illustrates an alternate battery pack cooling system in accordance with the prior art, the illustrated system utilizing both a radiator and a heat exchanger as described relative to Figs. 2 and 3, respectively;
Fig. 5 provides a schematic overview of the thermal control system of the invention;
Fig. 6 schematically illustrates a preferred embodiment of the thermal control system shown in Fig. 5;
Fig. 7 provides a block diagram of an exemplary control system for use with the thermal control system shown in Figs. 5 and 6; and
Fig. 8 provides a table that illustrates a variety of exemplary controller settings for an embodiment of the invention based on the configuration shown in Fig. 6.

### DESCRIPTION OF THE SPECIFIC EMBODIMENTS

In the following text, the terms "battery", "cell", and "battery cell" may be used interchangeably and may refer to any of a variety of different battery configurations and chemistries. Typical battery chemistries include, but are not limited to, lithium ion, lithium ion polymer, nickel metal hydride, nickel cadmium, nickel hydrogen, nickel zinc, and silver zinc. The terms "battery pack" and "battery pack enclosure" may be used interchangeably and refer to an enclosure containing one or more batteries electrically interconnected to achieve the desired voltage and capacity. The terms "electric vehicle" and "EV" may be used interchangeably and may refer to an all-electric vehicle, a plug-in hybrid vehicle, also referred to as a PHEV, or a hybrid vehicle, also referred to as a HEV, where a hybrid vehicle utilizes multiple sources of propulsion including an electric drive system. The terms "thermal control circuit" and "thermal control loop" may be used interchangeably.

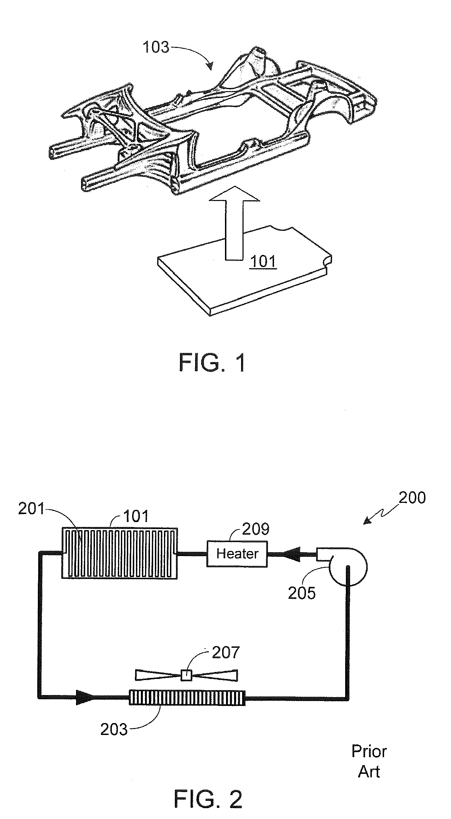

Fig. 1 provides a perspective view of a battery pack 101 configured to be mounted under vehicle chassis 103. It should be understood that the present invention is not limited to a specific battery pack mounting scheme, battery pack size, or battery pack configuration.

Fig. 2 illustrates an exemplary battery thermal management system 200 in accordance with the prior art. In system 200, the temperature of the batteries within battery pack 101 is controlled by pumping a thermal transfer medium, e.g., a liquid coolant, through a plurality of cooling conduits 201 integrated into battery pack 101. Conduits 201, which are fabricated from a material with a relatively high thermal conductivity, are positioned within pack 101 in order to optimize thermal communication between the individual batteries, not shown, and the conduits, thereby allowing the temperature of the batteries to be regulated by regulating the flow of coolant within conduits 201 and/or regulating the transfer of heat from the coolant to another temperature control system. In the illustrated embodiment, the coolant within conduits 201 is pumped through a radiator 203 using a pump 205. A blower fan 207 may be used to force air through radiator 203, for example when the car is stationary or moving at low speeds, thus insuring that there is an adequate transfer of thermal energy from the coolant to the ambient environment. System 200 may also include a heater 209, e.g., a PTC heater, that may be used to heat the coolant within conduits 201, and thus heat the batteries within pack 101.

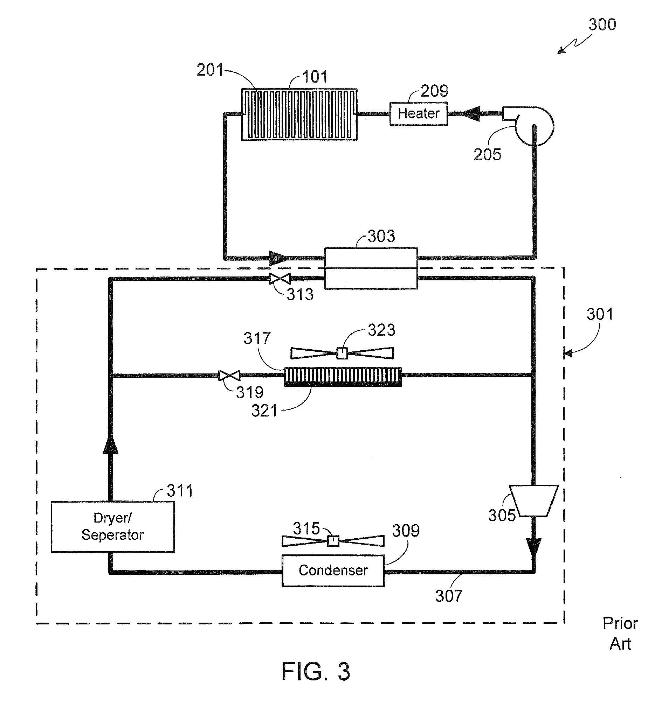

Fig. 3 illustrates an alternate battery pack thermal management system 300. In system 300 the coolant within conduits 201 is coupled to a secondary thermal management system 301 via a heat exchanger 303. Preferably thermal management system 301 is a refrigeration system and as such, includes a compressor 305 to compress the low temperature vapor in refrigerant line 307 into a high temperature vapor and a condenser 309 in which a portion of the captured heat is dissipated. After passing through condenser 309, the refrigerant changes phases from vapor to liquid, the liquid remaining at a temperature below the saturation temperature at the prevailing pressure. The refrigerant then passes through a dryer 311 that removes moisture from the condensed refrigerant. After dryer 311, refrigerant line 307 is coupled to heat exchanger 303 via thermal expansion valve 313 which controls the flow rate of refrigerant into heat exchanger 303. Additionally, in the illustrated system a blower fan 315 is used in conjunction with condenser 309 to improve system efficiency.

In a typical vehicle configuration, thermal management system 301 is also coupled to the vehicle's heating, ventilation and air conditioning (HVAC) system. In such a system, in addition to coupling refrigerant line 307 to heat exchanger 303, line 307 may also be coupled to the HVAC evaporator 317. A thermal expansion valve 319 is preferably used to control refrigerant flow rate into the evaporator. A heater, for example a PTC heater 321 integrated into evaporator 317, may be used to provide warm air to the passenger cabin. In a conventional HVAC system, one or more fans 323 are used to circulate air throughout the passenger cabin, where the circulating air may be ambient air, air cooled via evaporator 317, or air heated by heater 321.

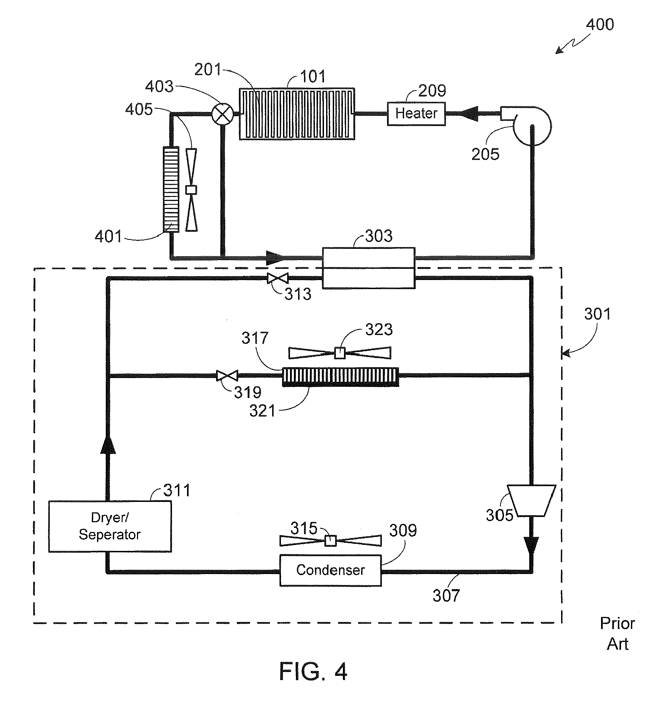

In some electric vehicles, battery pack cooling is accomplished using a combination of a radiator such as that shown in Fig. 2, and a heat exchanger such as that shown in Fig. 3. Fig. 4 illustrates such a conventional cooling system. In system 400, the coolant passing through battery pack 101 via conduits 201 may be directed through either radiator 401 or heat exchanger 303. Valve 403 controls the flow of coolant through radiator 401. Preferably a blower fan 405 is included in system 400 as shown, thus providing means for forcing air through the radiator when necessary, for example when the car is stationary.

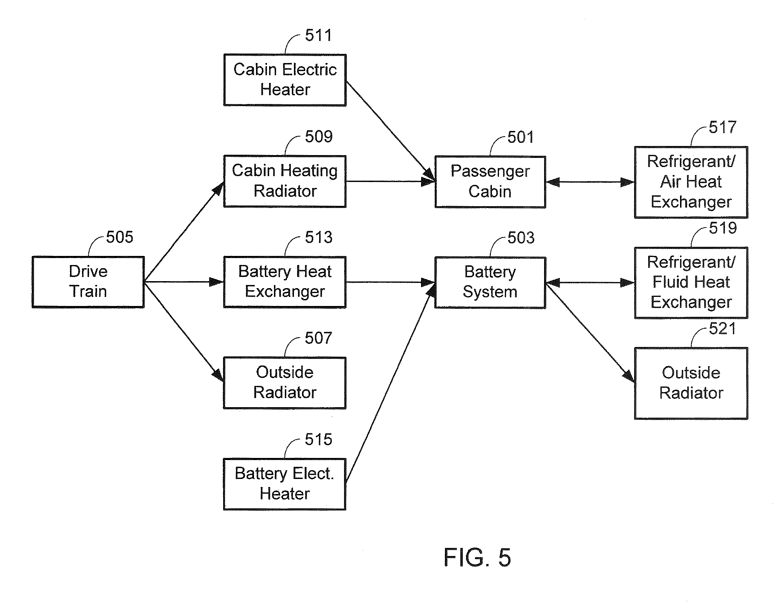

Fig. 5 provides a schematic overview of the thermal control system of the invention, this figure illustrating thermal communications between the three thermal control circuits and the passenger cabin 501, the battery system 503 and the drive train 505. The use of three thermal control circuits allows the thermal management system to efficiently regulate the temperature of cabin 501, battery system 503 and drive train 505, specifically minimizing heat loss by recycling the heat generated by the vehicle's subsystems. As described in detail below, the three control circuits preferably include a single refrigerant-based heat pump circuit and a pair of control loops that utilize a non-gaseous, heat-transfer fluid. As the heat-transfer fluid used in the latter two circuits is preferably water-based, e.g., pure water or water that includes an additive such as ethylene glycol or propylene glycol, throughout this specification these two circuits are often referred to as water-based cooling circuits. It should be understood, however, that these two circuits may utilize a non-water-based, heat-transfer fluid.

Passenger cabin 501 includes a HVAC system that provides the vehicle's occupants means for regulating cabin temperature. Battery system 503 includes at least one, and typically a plurality of batteries (e.g., tens, hundreds, or thousands of batteries), contained within a battery pack enclosure. In at least one configuration the batteries are cylindrically-shaped, for example utilizing an 18650 form-factor, and are positioned within the battery pack so that the cylindrical axis of each battery is substantially perpendicular to the lower battery pack enclosure panel as well as the surface of the road. Cooling conduits, preferably deformable cooling conduits, which contain a heat transfer medium (e.g., water), are in thermal communication with the batteries. In at least one preferred embodiment, the cooling conduits are aligned with the battery pack's lower panel, resulting in the coolant within the conduits flowing in a direction substantially perpendicular to the axes of the cylindrical batteries. By regulating the flow of the coolant (e.g., the heat transfer fluid) within the cooling conduits and/or regulating the transfer of heat from the coolant to another temperature control system, the temperature of the batteries may be regulated so that they remain within their preferred operating range. Preferably a thermal insulator (e.g., an air gap or one or more layers of a material with a low thermal conductivity) is used to limit the unintended transfer of thermal energy from the batteries and the battery cooling conduits to the battery pack enclosure. An example of a suitable battery pack cooling system is described in co-assigned U.S. Patent Application Serial No. 14/148,933, filed 7 January 2014, the disclosure of which is incorporated herein by reference for any and all purposes. It should be understood that in some vehicle configurations, battery system 503 may include other components associated with the vehicle's electrical system that may, or may not be, coupled to the cooling conduits used to regulate the temperature of the batteries. For example, in one embodiment battery system 503 includes a DC/DC converter that is used to convert the output of the battery pack to a voltage more suitable for use with the vehicle's various electrical accessories and auxiliary systems (e.g., exterior and interior lighting, audio system, navigation system, blower fans, etc.).

Drive train 505 includes one or more motors, typically three phase alternating current (i.e., AC) motors, which are used to provide propulsive power to the vehicle. The portion of the drive train 505 that is thermally regulated and that is used as a heat source in some thermal system configurations may also include a transmission and/or a power inverter, for example as described in co-assigned U.S. Patent Application Serial No. 14/176,053, filed 8 February 2014, the disclosure of which is incorporated herein by reference for any and all purposes. The power inverter converts the direct current (i.e., DC) power from the vehicle's batteries to match the power requirements of the propulsion motor(s). The transmission may be a single speed, fixed gear transmission or a multi-speed transmission.

Drive train 505 generates heat during operation, heat that can either be withdrawn and discarded using a radiator 507, or recycled and used to heat other vehicle systems. For example, the heat generated by drive train 505 may be used to heat battery system 503 or supply heat to passenger cabin 501.

In accordance with the invention, one of the water-based thermal control circuits is thermally coupled to battery system 503 while the second water-based thermal control circuit is thermally coupled to drive train 505. These thermal control circuits provide a thermal path for discarding the excess heat generated by drive train 505 through a radiator 507 and/or recycling the generated heat and using it to heat other vehicle systems and components. For example, the heat generated by drive train 505 may be used to heat a cabin heating radiator 509 which, in turn, is used to heat passenger cabin 501, thereby minimizing the need for a separate, electric passenger cabin heater 511. Similarly, excess drive train heat may be used to heat battery system 503 via a heat exchanger 513, thereby minimizing the need for an electric battery pack heater 515.

The third thermal control circuit, which is a refrigerant-based thermal control circuit as noted above, may be used in conjunction with heat exchanger 517 to either heat or cool passenger cabin 501. Similarly, the refrigerant-based thermal control circuit may be used in conjunction with heat exchanger 519 to either heat or cool battery system 503. Lastly, battery system 503 may be cooled by transferring heat to the ambient environment via one or more radiators 521.

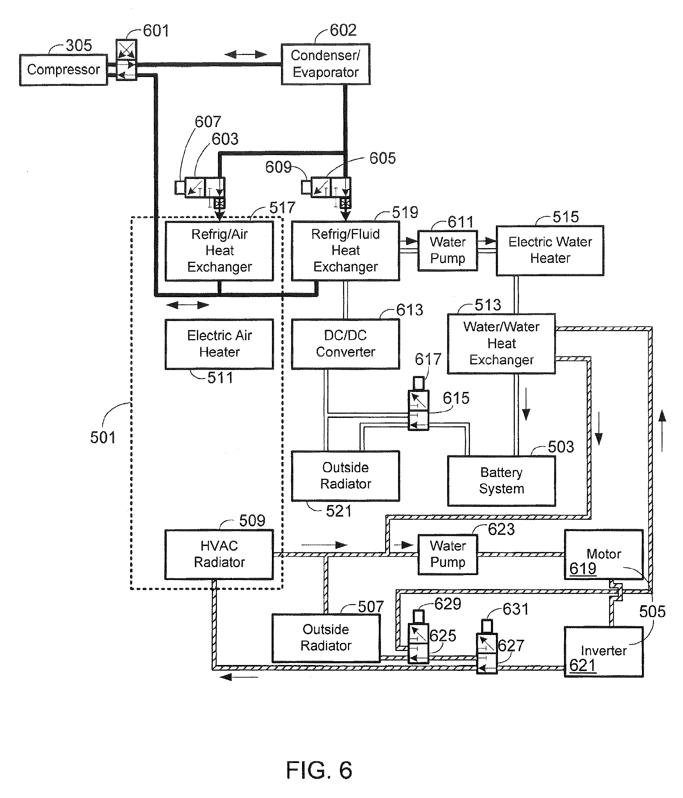

Fig. 6 schematically illustrates a thermal control system in accordance with the invention. While Fig. 6 shows the primary components comprising the thermal control system as well as the direction of refrigerant and thermal transfer fluid flow, it does not show all of the components and subassemblies that may be used in a typical implementation of the invention. For example, in a typical and preferred configuration, one or more blower fans (not shown) are used to force air throughout the passenger cabin 501, where the circulating air may be ambient air, air cooled or heated via heat exchanger 517, air heated by cabin heating radiator 509, or air heated by supplemental electric heater 511. Similarly, blower fans are typically used with the refrigeration system's condenser/evaporator 602 as well as radiators 507 and 521 as a means of improving system efficiency. Note that for clarity, in Fig. 6 the conduits carrying refrigerant, regardless of whether the refrigerant is in the vapor phase or liquid phase, are shown as solid while the conduits carrying a water-based or non-water based heat transfer fluid for the first water-based thermal control circuit are shown as hollow and the conduits carrying a water-based or non-water based heat transfer fluid for the second water-based thermal control circuit are shown with cross-hatching.

The refrigerant-based thermal control circuit includes a refrigerant reversing valve 601 that allows the direction of refrigerant flow to be reversed, thereby allowing the refrigerant-based system to be used in either a cooling mode or a heating mode. Due to the use of a reversing valve, the refrigerant-based control circuit also includes a component 602 that can serve either as a condenser or as an evaporator. Component 602 is referred to herein as a condenser/evaporator. As shown in Fig. 6, interposed between compressor 305 and condenser/evaporator 602 are a pair of heat exchangers 517 and 519. Heat exchanger 517 is a refrigerant/air heat exchanger, thus simplifying heating and/or cooling of passenger cabin 501 using the refrigerant-based thermal control circuit. Heat exchanger 519 is a refrigerant/heat transfer fluid (e.g., water) exchanger that allows the refrigeration system to directly cool or heat the heat transfer fluid used in the water-based thermal control circuit coupled to battery system 503. Additionally, since the thermal control circuit coupled to battery system 503 is also coupled to a fluid/fluid exchanger 513, the refrigeration system can also be used to indirectly cool or heat the heat transfer fluid used in the water-based thermal control circuit coupled to drive train 505.

The refrigerant-based thermal control circuit is coupled to heat exchangers 517 and 519 by a pair of expansion valves 603 and 605, respectively, which control the amount of refrigerant flowing through the heat exchangers. Expansion valves 603 and 605 are controlled by a pair of solenoids 607 and 609, respectively, thus allowing the vehicle's thermal management system to control refrigerant flow, and thus the temperature of the refrigerant side of heat exchangers 517 and 519.

The flow of coolant (e.g., water or other thermal transfer fluid) within the first thermal control circuit, which is coupled to battery system 503, is controlled by pump 611. In a preferred configuration, pump 611 operates continuously whenever the vehicle is in use, thus maintaining a relatively constant temperature throughout the battery system 503. Alternately, pump 611 may be configured to only operate when it is necessary to heat or cool the batteries, or when the range of temperatures corresponding to the batteries within the battery pack becomes too large. In some embodiments, pump 611 operates in a simple on/off configuration, while in other embodiments the coolant flow rate within this thermal loop is controlled by the operating speed of pump 611. Note that in the illustrated embodiment, the DC/DC converter 613 is shown as separate from battery system 503, albeit thermally coupled to the battery system via the thermal control loop. Alternately, the DC/DC converter 613 may be integrated within the battery system or may be excluded from this thermal control circuit.

A first diverter valve 615, under the control of solenoid 617, is used to control the amount of coolant (e.g., water or other thermal transfer fluid) in the battery system's thermal control circuit that flows through radiator 521. In at least one embodiment, when the battery system's thermal control circuit is being used to heat the batteries, regardless of whether the heat source is the refrigeration system operating in the heating mode or the supplemental electric heater 515, then diverter valve 615/617 may be used to modulate the battery temperature by controlling the amount of coolant flowing through radiator 521. Eventually the batteries generate enough heat that it becomes unnecessary to actively heat the batteries, for example by using the heat pump or the supplemental electric heater. Next, as the battery system 503 continues to heat up, in a typical embodiment it becomes necessary to actively cool the batteries to insure that they remain within the battery system's preferred operating temperature range. Depending upon the ambient temperature as well as the amount of heat that must be withdrawn, it may be sufficient to simply pass the coolant through radiator 521. Once it becomes necessary to use the refrigeration system to actively cool the coolant via heat exchanger 519, it may or may not be advantageous to pass coolant through radiator 521. Typically as long as the ambient temperature is lower than the batteries' upper operating range limit, passing the coolant through radiator 521 will at least lower the demands placed on the refrigeration system, thereby increasing system efficiency. If the ambient temperature becomes higher than the batteries' upper operating range limit, then diverter valve 615 is preferably used to completely bypass radiator 521, thereby relying solely on the refrigeration system coupled to heat exchanger 519 to control the temperature of the battery system 503.

The second water-based (or other fluid) thermal control circuit is coupled to the drive train 505 as described above. In the preferred embodiment, and as illustrated in Fig. 6, drive train 505 includes both the traction motor 619 and the power inverter 621. In an alternate embodiment, drive train 505 does not include both the traction motor 619 and the power inverter 621. The second thermal control loop is coupled to the first thermal control loop via heat exchanger 513. By coupling these two thermal loops together, heat generated by the drive train 505 may be used to heat batteries 503, as necessary, and cooling provided by the refrigerant-based control circuit may be used to cool the drive train 505, as necessary.

The flow of coolant (e.g., water or other thermal transfer fluid) within the second thermal control circuit is controlled by pump 623. In a preferred configuration, pump 623 only operates when it is necessary to transfer heat out of the drive train 505, for example to heat the batteries 503, to heat passenger cabin 501, or to cool the drive train 505. Alternately, pump 623 may operate continuously whenever the vehicle is in use. In some embodiments, pump 623 operates in a simple on/off configuration, while in other embodiments the coolant flow rate within this thermal loop is controlled by the operating speed of pump 623.

The second thermal control circuit includes a pair of diverter valves 625 and 627 under the control of solenoids 629 and 631, respectively. Diverter valve 625/629 determines whether the thermal transfer fluid within this loop flows through heat exchanger 513 or radiator 507. This valve may either be configured to only offer two positions, where the first position couples the thermal loop to heat exchanger 513 and where the second position couples the thermal loop to radiator 507. Alternately, valve 625 may allow a range of positions, thus allowing a controlled portion of the coolant to flow through heat exchanger 513 and a second, controlled portion of the coolant to flow through radiator 507. In at least one preferred embodiment, when battery heating is required and the temperature of the water (or other heat transfer fluid) within the second thermal control circuit is higher than the current battery temperature, diverter valve 625 is set such that coolant flows through heat exchanger 513. Once battery heating is no longer required, or if the coolant temperature within the second thermal control loop is lower than the current battery temperature, the diverter valve 625 is set to couple the second thermal control loop to radiator 507.

Diverter valve 627/631 determines the amount of coolant from the second thermal control circuit that passes through HVAC radiator 509, thus providing an efficient means of heating the passenger cabin 501. Preferably valve 627/631 permits a range of positions, thus allowing a portion of the coolant to be used with the HVAC system while a second portion of the coolant flows through radiator 507 and/or heat exchanger 513. When the passenger cabin 501 does not require heating, or when cabin 501 requires heating but the temperature of the coolant within the second thermal control loop is lower than the present cabin temperature, then valve 627/631 is set to completely bypass HVAC radiator 509. When passenger cabin 501 requests heat and the coolant temperature within this loop is higher than the present cabin temperature, then valve 627/631 is modulated to provide the desired level of heating via HVAC radiator 509.

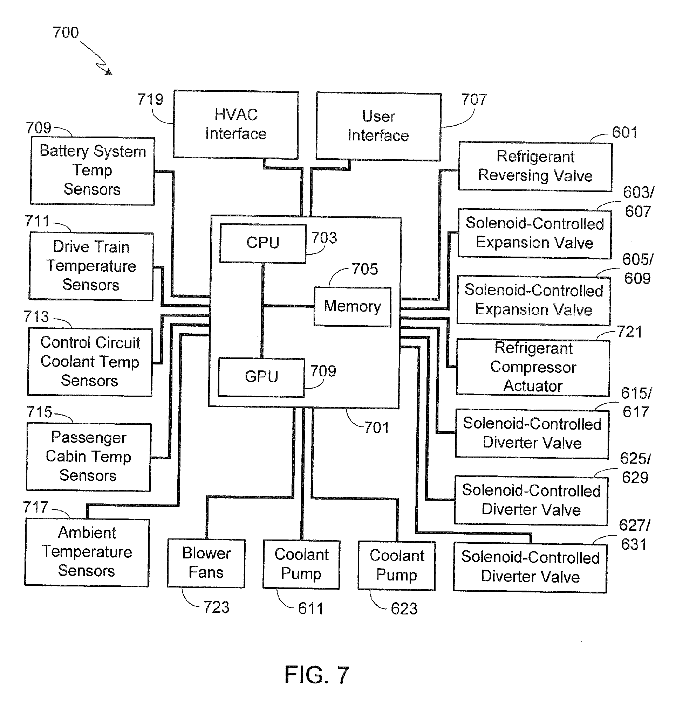

Fig. 7 is a block diagram of an exemplary control system 700 for use with the thermal control system shown in Figs. 5 and 6. Control system 700 includes a system controller 701. System controller 701 may be the same controller used to perform other vehicle functions, i.e., system controller 701 may be a vehicle system controller that may be used to control any of a variety of vehicle subsystem, e.g., navigation system, entertainment system, suspension (e.g., air suspension), battery charging, vehicle performance monitors, etc. Alternately, system controller 701 may be separate from the vehicle's system controller. System controller 701 includes a central processing unit (CPU) 703 and a memory 705. Memory 705 may be comprised of EPROM, EEPROM, flash memory, RAM, a solid state disk drive, a hard disk drive, or any other memory type or combination of memory types. Memory 705 may be used to store the preset operating temperature ranges for battery system 503 and drive train 505. If the vehicle uses a touch-screen or similar display means 707 as the user interface, controller 701 may also include a graphical processing unit (GPU) 709. CPU 703 and GPU 709 may be separate or contained on a single chip set.

Coupled to controller 701 are a plurality of temperature sensors that monitor the temperatures of various components and systems under the control of the thermal control system. For example, preferably battery system 503 includes multiple temperature sensors 709 that provide an average battery pack temperature as well as temperature uniformity data for the battery system. Drive train 505 may also include one or more temperature sensors 711. Temperature sensors may also be used to monitor the temperature of the coolant within the two water-based thermal control circuits, i.e., temperature sensors 713, as well as the temperature within the passenger cabin (sensor 715) and the ambient temperature (sensor 717). Also coupled to controller 701 is a HVAC system interface 719 that allows the desired passenger cabin temperature to be set by the driver and/or passengers, where the desired temperature may be configured to either be set by zone or a single temperature for the entire cabin. The HVAC system interface 719 may be a HVAC dedicated interface, e.g., temperature control switches mounted within the passenger cabin, or may utilize a common user interface such as display interface 707.

As described above, the thermal control system of the invention uses multiple solenoid controlled valves to insure that the vehicle's subsystems, such as the passenger cabin 501 and the battery system 503, are maintained within their desired temperature range. Accordingly, coupled to controller 701 is an actuator 721 for compressor 305, reversing valve 601, and solenoid-controlled expansion valves 603/607 and 605/609, thereby providing control of the refrigerant-based thermal control circuit. Also coupled to controller 701 are the three solenoid-controlled diverter valves, i.e., 615/617, 625/629, and 627/631, and the two coolant pumps 611 and 623, thereby providing control of the two water-based thermal control circuits. Preferably multiple blower fans 723 are also coupled to controller 701, thereby allowing the system to control the air flow through condenser/evaporator 602, and/or heat exchanger 517, and/or radiators 507, 509 and 521.

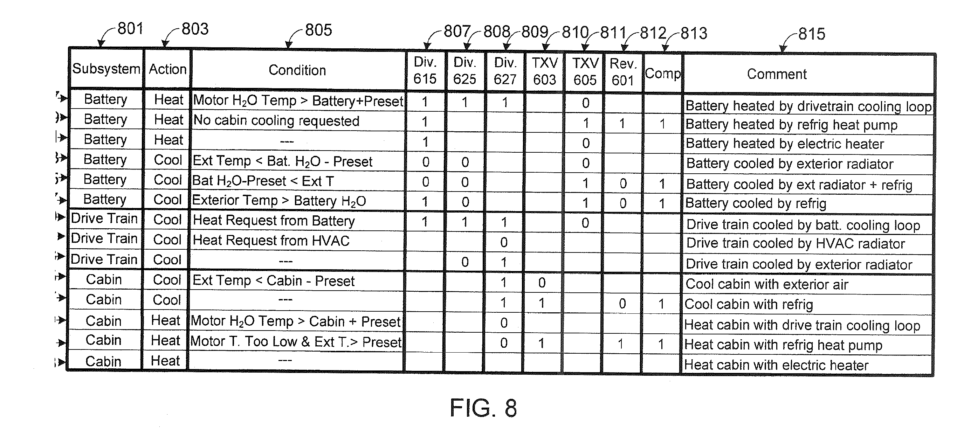

Fig. 8 provides a table that illustrates a variety of exemplary controller settings for an embodiment of the invention based on the configuration shown in Fig. 6. To simplify this embodiment, all valves are shown as only having two states, where "1" signifies "on" or "closed" while "0" signifies "off" or "open". It should be understood, however, that the system may also be configured to allow at least some of the valves to have a range of positions between "0" and "1", thus allowing increased control over the thermal circuits and the heating/cooling of the vehicle's primary thermal systems (e.g., passenger cabin 501, battery system 503 and drive train 505). For clarity, when a diverter valve is closed, i.e., is in the "1" state, the coolant is diverted. Therefore when diverter valve 615/617 is closed (i.e., a "1" state), the coolant within the first water-based thermal circuit bypasses radiator 521. Similarly, when diverter valve 625/629 is closed (i.e., a "1" state), the coolant within the second water-based thermal circuit bypasses radiator 507, and when diverter valve 627/631 is closed (i.e., a "1" state), the coolant within the second water-based thermal circuit bypasses radiator 509. With respect to the solenoid-controlled expansion valve 603/607, when it is closed (i.e., set to "1"), the refrigerant passes through heat exchanger 517. Similarly, when solenoid-controlled expansion valve 605/609 is closed (i.e., set to "1"), the refrigerant passes through heat exchanger 519.

In the table of Fig. 8, column 801 indicates the system that is making the heating or cooling request indicated in column 803. The three systems shown in column 801 are the passenger cabin 501, battery system 503 and drive train 505. Column 805 provides detail as to the relative thermal conditions of the various components, for example the difference between the present temperature of the requesting system and the ambient temperature and/or the coolant temperature in one of the thermal control circuits. Columns 807-813 provide setting information for diverter valve 615/617, diverter valve 625/629, diverter valve 627/631, solenoid-controlled expansion valve 603/607, solenoid-controlled expansion valve 605/609, reversing valve 601, and compressor 305. Column 815 provides an explanatory comment regarding each set of illustrated settings. A brief description of each of the conditions described in Fig. 8 follows. It should be understood that the settings shown in Fig. 8 simply illustrate possible system configurations utilizing the present invention to achieve specific results and therefore should not be viewed as a set of limiting configurations.

In row 817, the battery issues a heating request and the coolant in the second thermal control circuit, which is coupled to drive train 505, is greater than the present battery system temperature by a preset margin (e.g., by at least 10° C). Under these circumstances, all three diverter valves are set to "1", thereby causing the coolant in the first thermal control circuit to bypass radiator 521, and the coolant in the second thermal control circuit to bypass both radiators 507 and 509. As a result, the coolant that is heated by the drive train 505 passes through heat exchanger 513 and heats the coolant in the first loop, and thus battery system 503. Note that in this configuration the refrigerant-based thermal control loop is not coupled to the first water-based thermal control loop since solenoid-controlled expansion valve 605/609 is set to "0". It will be appreciated that supplemental heater 515 may be used, as required, to augment the battery system heating provided by the drive train thermal control circuit.

In row 819, the battery issues a heating request at the same time as passenger cabin cooling is not required, thus allowing the refrigerant-based thermal control loop to be placed into the heating mode. Accordingly, compressor 305 is turned on, reversing valve is switched to the heat mode (i.e., set to "1"), and solenoid-controlled expansion valve 605/609 is set to "1" so that refrigerant passes through heat exchanger 519. Diverter valve 615/617 is also set to "1", thereby bypassing radiator 521. In this configuration, the coolant in the first thermal control circuit, which is coupled to battery system 503, is heated by the refrigeration system operating in the heat pump mode. Note that the second thermal circuit, which is coupled to drive train 505, may still be used, for example this loop may be (i) set to heat passenger cabin 501 via radiator 509, (ii) set to eliminate excess heat via radiator 507, or (iii) set to augment the heat supplied by the heat pump via heat exchanger 513.

In row 821, after the battery issues a heating request, heat is supplied by supplemental heater 515 and diverter valve 615/617 is set to "1" in order to bypass radiator 521. In row 821, the reversing valve is set to the cooling mode (i.e., set to "0") and therefore heat is not being supplied by the refrigerant-based loop via heat exchanger 519. Note that the second thermal circuit, which is coupled to drive train 505, may still be used, for example this loop may be (i) set to heat passenger cabin 501 via radiator 509, (ii) set to eliminate excess heat via radiator 507, or (iii) set to augment the heat supplied by supplemental heater 515.

In row 823, the battery issues a cooling request and, based on the exterior temperature relative to the battery temperature, cooling is provided by radiator 521. Preferably the ambient temperature has to be lower than the battery system temperature by a preset margin (e.g., by at least 10° C) in order to utilize radiator 521 for cooling. In this configuration, battery cooling is not being augmented by the refrigerant-based loop since the solenoid-controlled expansion valve 605/609 is set to "0" and as such the refrigerant is not flowing through heat exchanger 519. Note that as diverter valve 625/629 is set to "0", the coolant in the second water-based thermal control circuit passes through radiator 507 rather than flowing through heat exchanger 513.

In row 825, after the battery issues a cooling request, heat is withdrawn from the battery system by both radiator 521 and the refrigerant-based loop via heat exchanger 519. Accordingly, diverter valve 615/617 is set to "0" so that the coolant within the first water-based thermal control loop will pass through radiator 521, compressor 305 is turned on (i.e., set to "1"), reversing valve 601 is set to the cooling mode (i.e., set to "0"), and solenoid-controlled expansion valve 605/609 is set to "1" so that the refrigerant is flowing through heat exchanger 519. Note that as diverter valve 625/629 is set to "0", the coolant in the second water-based thermal control circuit passes through radiator 507 rather than flowing through heat exchanger 513.

In row 827, because the exterior temperature is too high to allow heat to be removed from the battery system 503 via a radiator, diverter valve 615/617 is set to "1" thereby preventing the coolant in the first water-based thermal control circuit from flowing through radiator 521. In this configuration the battery system is only cooled using the refrigerant-based thermal circuit. As such, compressor 305 is turned on (i.e., set to "1"), reversing valve 601 is set to the cooling mode (i.e., set to "0"), and solenoid-controlled expansion valve 605/609 is set to "1" so that the refrigerant is flowing through heat exchanger 519.

In row 829, the drive train 505 requires cooling at the same time as the battery requires heating. Under these circumstances, all three diverter valves are set to "1", thereby causing the coolant in the first thermal control circuit to bypass radiator 521, and the coolant in the second thermal control circuit to bypass both radiators 507 and 509. As a result, the coolant that is heated by the drive train 505 passes through heat exchanger 513 and heats the coolant in the first loop, thereby allowing heat to be withdrawn from the drive train 505 and used to heat the battery system 503. Note that in this configuration the refrigerant-based thermal control loop is not coupled to the first water-based thermal control loop since solenoid-controlled expansion valve 605/609 is set to "0".

In row 831, the drive train 505 requires cooling at the same time as the passenger cabin 501 requires heating. Under these circumstances, diverter valve 627/631 is set to "0", thereby causing the coolant in the second thermal control circuit to flow through HVAC radiator 509. As a result, drive train 505 is cooled while heating passenger cabin 501.

In row 833, drive train 505 is cooled using radiator 507. In this configuration diverter valve 625/629 is set to "0" so that the coolant in the drive train cooling loop (i.e., the second water-based thermal control circuit) flows through radiator 507. Diverter valve 627/631 is set to "1" so that the coolant in the drive train cooling loop bypasses HVAC radiator 509.

In row 835, the passenger cabin 501 requests cooling when the outside temperature is lower than the requested temperature by a preset margin (e.g., by at least 10° C). In this configuration diverter valve 627/631 is set to "1" so that the coolant in the drive train cooling loop bypasses HVAC radiator 509 while solenoid-controlled expansion valve 603/606 is set to "0" so that refrigerant does not pass through heat exchanger 517. If the ambient temperature is not low enough to provide the necessary cooling for passenger cabin 501 (i.e., row 837), then the solenoid-controlled expansion valve 603/606 setting is changed to "1" so that refrigerant does pass through heat exchanger 517. Additionally, compressor 305 is turned on (i.e., set to "1") and reversing valve 601 is set to the cooling mode (i.e., set to "0").

In row 839, the passenger cabin 501 requests heating when the temperature of the coolant in the drive train cooling loop, i.e., the second water-based thermal control circuit, is higher than the requested temperature by a preset margin (e.g., by at least 10° C). In this configuration diverter valve 627/631 is set to "0" so that the coolant in the drive train cooling loop flows through HVAC radiator 509, thereby heating the passenger cabin 501.

In row 841, the passenger cabin 501 requests heating when the temperature of the coolant in the drive train cooling loop is not high enough to provide the requested heat. In this configuration, in addition to passing the drive train coolant through HVAC radiator 509 by setting diverter valve 627/631 to "0", heat is supplied by the refrigerant-based system. Accordingly, compressor 305 is turned on (i.e., set to "1"), reversing valve is switched to the heat mode (i.e., set to "1"), and solenoid-controlled expansion valve 603/607 is set to "1" so that refrigerant passes through heat exchanger 517.

In row 843, heat is supplied to passenger cabin using only supplemental heater 511.

Systems and methods have been described in general terms as an aid to understanding details of the invention. In some instances, well-l<nown structures, materials, and/or operations have not been specifically shown or described in detail to avoid obscuring aspects of the invention. In other instances, specific details have been given in order to provide a thorough understanding of the invention. One skilled in the relevant art will recognize that the invention may be embodied in other specific forms, for example to adapt to a particular system or apparatus or situation or material or component, without departing from the spirit or essential characteristics thereof. Therefore the disclosures and descriptions herein are intended to be illustrative, but not limiting, of the scope of the invention.

## Claims

1. A three loop vehicle thermal management system, comprising:
a refrigerant-based thermal control loop, wherein said refrigerant-based thermal control loop is comprised of a refrigerant, a compressor, a condenser/evaporator, and a reversing valve, wherein said reversing valve is settable in a first mode and a second mode, wherein said first mode is a cooling mode and said second mode is a heating mode;
a refrigerant-air heat exchanger coupled to said refrigerant-based thermal control loop by a first solenoid-controlled expansion valve, wherein said refrigerant-air heat exchanger is thermally coupled to a vehicle HVAC system;
a first thermal control circuit utilizing a first thermal transfer fluid and a first fluid pump, wherein said first thermal transfer fluid is not comprised of said refrigerant, and wherein said first thermal control circuit is thermally coupled to a vehicle battery system;
a refrigerant-fluid heat exchanger coupled to said refrigerant-based thermal control loop by a second solenoid-controlled expansion valve, wherein said refrigerant-fluid heat exchanger is thermally coupled to said first thermal control circuit;
a second thermal control circuit utilizing a second thermal transfer fluid and a second fluid pump, wherein said second thermal transfer fluid is not comprised of said refrigerant, and wherein said second thermal control circuit is thermally coupled to a vehicle drive train; and
a fluid-fluid heat exchanger thermally coupling said first thermal control circuit to said second thermal control circuit.

2. The three loop vehicle thermal management system of claim 1,
wherein said first solenoid-controlled expansion valve in a first position decouples said refrigerant-based thermal control loop from said refrigerant-air heat exchanger, and wherein said first solenoid-controlled expansion valve in a second position couples said refrigerant-based thermal control loop to said refrigerant-air heat exchanger.

3. The three loop vehicle thermal management system of claim 2,
wherein said first solenoid-controlled expansion valve is adjustable within a range of positions from said first position to said second position, and wherein said range of positions varies a refrigerant flow rate from said refrigerant-based thermal control loop through said refrigerant-air heat exchanger.

4. The three loop vehicle thermal management system of anyone of claims 1-3, wherein said second solenoid-controlled expansion valve in a first position decouples said refrigerant-based thermal control loop from said refrigerant-fluid heat exchanger, and wherein said second solenoid-controlled expansion valve in a second position couples said refrigerant-based thermal control loop to said refrigerant-fluid heat exchanger.

5. The three loop vehicle thermal management system of claim 4,
wherein said second solenoid-controlled expansion valve is adjustable within a range of positions from said first position to said second position, and wherein said range of positions varies a refrigerant flow rate from said refrigerant-based thermal control loop through said refrigerant-fluid heat exchanger.

6. The three loop vehicle thermal management system of anyone of claims 1-5, further comprising a radiator coupled to said first thermal control circuit by a diverter valve, wherein said diverter valve in a first position couples said radiator to said first thermal control circuit and allows at least a portion of said first thermal transfer fluid to flow through said radiator, and wherein said diverter valve in a second position decouples said radiator from said first thermal control circuit and allows said first thermal transfer fluid within said first thermal control circuit to bypass said radiator.

7. The three loop vehicle thermal management system of claim 6,
wherein said diverter valve in said first position allows a second portion of said first thermal transfer fluid to bypass said radiator, and wherein said diverter valve in a third position couples said radiator to said first thermal control circuit and allows said first thermal transfer fluid to flow through said radiator while preventing said second portion of said first thermal transfer fluid from bypassing said radiator.

8. The three loop vehicle thermal management system of anyone of claims 1-7, further comprising a radiator coupled to said first thermal control circuit by a diverter valve, wherein said diverter valve in a first position couples said radiator to said first thermal control circuit and allows said first thermal transfer fluid to flow through said radiator, and wherein said diverter valve in a second position decouples said radiator from said first thermal control circuit and allows said first thermal transfer fluid within said first thermal control circuit to bypass said radiator.

9. The three loop vehicle thermal management system of anyone of claims 1-8, further comprising a radiator coupled to said second thermal control circuit by a diverter valve, wherein said diverter valve in a first position couples said radiator to said second thermal control circuit and allows said second thermal transfer fluid to flow through said radiator, and wherein said diverter valve in a second position decouples said radiator from said second thermal control circuit and allows said second thermal transfer fluid within said second thermal control circuit to bypass said radiator and flow through said fluid-fluid heat exchanger.

10. The three loop vehicle thermal management system of anyone of claims 1-9, further comprising a HVAC radiator coupled to said second thermal control circuit by a diverter valve, wherein said diverter valve in a first position couples said HVAC radiator to said second thermal control circuit and allows at least a portion of said second thermal transfer fluid to flow through said HVAC radiator, and wherein said diverter valve in a second position decouples said HVAC radiator from said second thermal control circuit and allows said second thermal transfer fluid within said second thermal control circuit to bypass said HVAC radiator.

11. The three loop vehicle thermal management system of claim 10,
wherein said diverter valve in said first position allows a second portion of said second thermal transfer fluid to bypass said HVAC radiator, and wherein said diverter valve in a third position couples said HVAC radiator to said second thermal control circuit and allows said second thermal transfer fluid to flow through said HVAC radiator while preventing said second portion of said second thermal transfer fluid from bypassing said HVAC radiator.

12. The three loop vehicle thermal management system of anyone of claims 1-11, further comprising a HVAC radiator coupled to said second thermal control circuit by a diverter valve, wherein said diverter valve in a first position couples said HVAC radiator to said second thermal control circuit and allows said second thermal transfer fluid to flow through said HVAC radiator, and wherein said diverter valve in a second position decouples said HVAC radiator from said second thermal control circuit and allows said second thermal transfer fluid within said second thermal control circuit to bypass said HVAC radiator.

13. The three loop vehicle thermal management system of anyone of claims 1-12, further comprising a supplemental electric heater coupled to at least one of said vehicle HVAC system and said first thermal control circuit.

14. The three loop vehicle thermal management system of anyone of claims 1-13, said vehicle battery system comprising a battery pack containing a plurality of batteries and a plurality of cooling conduits in thermal communication with said plurality of batteries, wherein said first thermal transfer fluid flows through said plurality of cooling conduits.

15. The three loop vehicle thermal management system of anyone of claims 1-14, wherein said first thermal transfer fluid is selected from the group consisting of water and water containing an additive, and wherein said second thermal transfer fluid is selected from the group consisting of water and water containing said additive.
